# EUROPÄISCHE PATENTSCHRIFT

(11) **EP 2 647 972 B1**
(45) Veröffentlichungstag und Bekanntmachung des Hinweises auf die Patenterteilung: **13.06.2018**
(21) Anmeldenummer: 12401060.4
(22) Anmeldetag: 03.04.2012
(51) Int. Cl.: G01G 15/00, G01G 17/00, G01G 23/00, G01G 19/03, B07C 5/18, B01D 61/12, B07C 5/16

(54) **Wiegevorrichtung**
Weighing device
Dispositif de pesage

(43) Veröffentlichungstag der Anmeldung: 09.10.2013
(73) Patentinhaber: WIPOTEC GmbH, 67657 Kaiserslautern (DE)
(72) Erfinder: Schulzki, Alexander, 67705 Stelzenberg (DE)
(74) Vertreter: Eder, Thomas

(56) Entgegenhaltungen:
- US-A- 3 434 595
- US-A- 3 613 808
- US-A- 5 561 274

## Beschreibung

Die vorliegende Erfindung betrifft eine Wiegevorrichtung zur geschwindigkeitsunabhängigen Gewichtsbestimmung diskreter und schnell bewegter Wiegegüter.

Viele industriell hergestellte Produkte werden kontinuierlich und mit großer Stückzahl gefertigt. Oft ist es dabei erforderlich, die Produkte zu wiegen, um beispielsweise eine bestimmte Menge eines Produkts, meist festgelegt durch das Gewicht, einer zugehörigen Verpackungseinheit zuzuführen. Die bewegten Produktströme müssen dabei zur Vermeidung von Verzögerungen gewogen werden, während sie mit oft hoher Geschwindigkeit durch die Produktionsanlagen gefördert werden. Das Wiegen dient dabei als Kontrollanwendung, um die Produkte hinsichtlich des Gewichts, ihrer Vollständigkeit innerhalb einer Packungseinheit etc. überprüfen zu können.

Bekannt sind dafür beispielsweise Waagen mit Förderbändern, die auf einer Wägezelle aufsitzen. Das Förderband bildet eine Vorlast für die Wägezelle. Während der Produktstrom über das Förderband weiter bewegt wird, kann er gleichzeitig gewogen werden. Solche Förderbänder sind allerdings konstruktiv aufwändig, die Vermeidung von Kraftnebenschluss, insbesondere am Motorkabel, ist schwierig und auch die Reinigung der Komponenten eines solchen Förderbandes ist aufwändig.

Aus dem Stand der Technik sind Wägerutschen bekannt, bei denen der Produktstrom über eine gegenüber der Horizontalen geneigte Gleitfläche abwärts rutscht. Die Rutsche bildet dabei Vorlast für eine Wägezelle, um das Gewicht des Produktstroms zu erfassen, während er über die Wägerutsche gleitet. Um den Einfluss von Reibungseffekten oder anderen dynamischen Kräften, die entlang der Gleitrichtung auf die Wägerutsche einwirken, zu beseitigen, ist die Wägezelle mit ihrer Lasteinleitungsrichtung möglichst senkrecht zur Gleitfläche bzw. Transportrichtung der Wägerutsche angeordnet. Auf diese Weise wirken die aus der Bewegung des Produkts resultierenden dynamischen Kräfte aus Beschleunigung / Verzögerung stets quer zur Lasteinleitung und nehmen daher keinen Einfluss auf das Messergebnis.

Gegenüber angetriebenen Förderbändern sind Wägerutschen konstruktiv einfacher herzustellen, leichter zu reinigen und nahezu verschleißfrei, während bei Förderbändern ein Verschleiß an Gurten und/oder Wellen auf Dauer nicht zu vermeiden ist.

Aus der DE 689 083 64 T2 ist eine solche Vorrichtung zum Wiegen eines kontinuierlichen Stroms fließenden Materials bekannt. Auch die DE 199 47 394 A1 beschreibt ein Verfahren und eine Vorrichtung zum Messen von Schüttgutströmen. Beide Verfahren bzw. Vorrichtungen erfordern nachteiligerweise jedoch zwingend die Bestimmung der Geschwindigkeit des Schüttguts, da ohne deren Ermittlung ein absoluter Gewichtswert nicht gebildet werden kann. Zur Ermittlung der Geschwindigkeit des Schüttguts kommen dabei unterschiedliche Verfahren in Frage, die technisch aufwändig und fehlerbehaftet sind. Zur Gewichtsbestimmung vereinzelter bzw. diskreter Wiegegüter ist die Vorrichtung ungeeignet.

Die US 3 434 595 A beschreibt eine geneigte Rutsche für diskrete Produkte, die während des Rutschens gewogen werden können. Am unteren Ende der Rutsche ist ein Sensor zur Betätigung eines Ausscheidungsmechanismus' vorgesehen, um Produkte außerhalb spezifizierter Gewichtswerte aus dem Produktstrom ausscheiden zu können. Der zeitliche Verlauf des Wiegevorganges ist nicht vorgebbar.

Aufgabe der Erfindung war es daher, eine Vorrichtung zur Gewichtsbestimmung bewegter Güter anzubieten, die ohne Bestimmung einer Fördergeschwindigkeit auskommt.

Die Aufgabe wird gelöst durch eine Wiegevorrichtung nach Anspruch 1.

Die Erfindung beruht auf der Erkenntnis, dass das Gewicht vereinzelter und einer Wägerutsche diskret zugeführter Wiegegüter ohne Ermittlung ihrer Geschwindigkeit möglich ist, wenn die Zufuhr jedes Wiegeguts auf die Gleitfläche der Wägerutsche detektierbar ist. Entsprechend genügt es dann, die Gewichtsbestimmung mittels Wägezelle innerhalb eines vorgebbaren Zeitraums nach Erkennen des zugeführten Wiegeguts auszulösen bzw. durchzuführen. Die Geschwindigkeit des Wiegeguts ist dann für die Ermittlung des Gewichts unerheblich, so lange die Verweildauer des Wiegeguts jedenfalls technisch zur Ermittlung des Gewichtswerts ausreicht. Ein Absolutwert der Geschwindigkeit ist erfindungsgemäß jedoch weitgehend bedeutungslos, so dass die Wiegevorrichtung auf die aus dem Stand der Technik bekannten Mittel zur Geschwindigkeitsbestimmung vorteilhaft verzichten kann.

Die erfindungsgemäße Wiegevorrichtung umfasst eine Wägerutsche mit einer Gleitfläche, wobei die Gleitfläche gegenüber der Horizontalen um einen Winkel β von vorzugsweise 25° oder mehr geneigt ist. Die zu wiegenden Wiegegüter sind der Gleitfläche in vereinzelter bzw. diskreter Form zuführbar. Das bedeutet, dass das Zuführen eines Wiegeguts auf die Gleitfläche auf jedes Wiegegut individuell detektierbar ist.

Die Wägerutsche mit ihrer Gleitfläche bildet Vorlast für eine Wägezelle, wobei die Wägezelle mit ihrer Lasteinleitungsrichtung senkrecht zur Gleitfläche ausgerichtet ist. Dadurch nehmen dynamische Effekte, die aus der Bewegung bzw. Geschwindigkeit der Wiegegüter entlang der Gleitfläche wirken, keinen Einfluss auf den senkrecht dazu beaufschlagten Lastaufnehmer der Wägezelle. Die Wägezelle kann nach jedem dem Fachmann bekannten Prinzip arbeiten, insbesondere nach dem Prinzip der elektromagnetischen Kraftkompensation.

Weiterhin ist wenigstens ein Detektor zur Erfassung eines der Gleitfläche zugeführten Wiegeguts vorgesehen. Ein Signal des Detektors kann zur Auslösung und/oder zum Beenden des Wiegevorgangs verwendet werden, wobei jeder dem Fachmann geläufigen Sensor (Ultraschall, Lichtschranke, Näherungssensor, Kamera, Gewichtsträger etc.) in Frage kommt.

Damit reicht es zur Bestimmung des Gewichts eines bewegten Wiegeguts aus, die von dem Wiegegut auf die Gleitfläche ausgeübte und in die Wägezelle eingeleitete Kraft zu einem (beispielsweise über den Detektor) vorgebbaren Zeitpunkt oder in einer Zeitspanne zu erfassen, wobei der Messwert der Wägezelle über geeignete Kalibrierfaktoren noch angepasst werden kann. Die Ermittlung der Geschwindigkeit, mit der das Wiegegut über die Wägerutsche gleitet, ist jedoch für den Gewichtswert unerheblich.

Die erfindungsgemäße Wiegevorrichtung ist zur Gewichtsbestimmung unterschiedlicher diskreter Wiegegüter geeignet, insbesondere auch für Briefe oder Pakete. Besonders gut geeignet ist die Wiegevorrichtung aber auch für diskrete Güter, die jeweils gleiche äußere Abmessungen haben, wie beispielsweise Tabletten oder Kapseln. Bei wiederkehrenden bzw. konstanten Abmessungen der Wiegegüter, die meist mit einem annähernd konstanten Gewicht einhergehen, lassen sich Schwellwerte zur Auslösung des Wiegevorgangs leichter festlegen. Auch für formatfreies Wiegen beziehungsweise für das Wiegen von Gütern verschiedener Formate ist die erfindungsgemäße Wiegevorrichtung besonders geeignet, da spezielle Aufnahmen oder Matrizen zum vorübergehenden Aufnehmen der Produkte entfallen können.

Erfindungsgemäß ist der wenigstens eine Detektor insbesondere zur Bestimmung eines Zeitfensters ausgebildet, innerhalb dessen die Gewichtsbestimmung erfolgen soll. Gelangt beispielsweise eine zu wiegende Kapsel über eine Zuführung an das obere Ende der Gleitfläche der Wägerutsche, so kann ein das Wägegut dort erfassender Detektor ein Signal an eine übergeordnete Steuereinheit übermitteln. Für eine vorgebbare Zeitspanne, die sich unmittelbar an das eintreffende Signal des Detektors oder auch mit einem vorgebbaren zeitlichen Abstand dazu anschließen kann, wird der von der Wägezelle erfasste Messwert zur Gewichtsbestimmung herangezogen, was ebenfalls in der übergeordneten Steuereinheit erfolgen kann. Denkbar ist es auch, die Wiegevorrichtung zur Gewichtsbestimmung mehrerer Wiegegüter innerhalb eines Zeitfensters auszubilden, in welchem sich mehrere Wiegegüter gleichzeitig auf der Gleitfläche der Wägerutsche befinden. Bei geschickter Wahl der Länge der Gleitfläche und des Zuführungstaktes, mit dem die Wiegegüter der Gleitfläche zugeführt werden, ergibt sich dabei ein treppenstufenartiger Anstieg des Messwertes für jedes weitere, zusätzlich auf die Gleitfläche gelangende Wiegegut, während der Messwert stufenartig abnimmt, wenn ein Wiegegut die Gleitfläche verlässt. Vermeidet man die Zufuhr eines Wiegeguts im gleichen Moment, in dem ein anderes Wiegegut die Gleitflächen verlässt, lassen sich die protokollierten Sprünge des Messwertes einzelnen Wiegegütern genau zuordnen. Durch Bilanzierung der zu- beziehungsweise abgeführten Wiegegüter (Differenzverfahren) können einzelnen Gütern die jeweils korrekten Gewichtswerte zugeordnet werden, selbst wenn sich stets mehrere davon auf der Wägerutsche befinden. Über die Anzahl der auf der Gleitfläche vorhandenen Wiegegüter lassen sich über Mittelwertbildung Rückschlüsse für das Gewicht jedes einzelnen Wiegeguts ziehen. Zweckmäßigerweise werden die Güter der Wägerutsche fluchtend zur Bewegungsbahn auf der Rutsche zugeführt, so dass Sprünge im Gewichtswert beim Auftreffen der Güter auf die Rutsche, beziehungsweise bei deren Verlassen vermieden werden.

Eine besonders komfortable Ausführungsform der Erfindung sieht jeweils einen Detektor am oberen bzw. unteren Ende der Gleitfläche vor, um das Erreichen oder Verlassen der einzelnen Wiegegüter auf bzw. von der Gleitfläche genauer und unabhängig vom Wägezellenmesswert bestimmen zu können. So lässt sich die Anzahl der gleichzeitig auf der Gleitfläche vorhandenen Wiegegüter genau bestimmen. Auch lässt sich die maximale Länge eines Zeitfensters, innerhalb dessen nur ein Wiegegut der Gleitfläche zugeführt werden soll, durch diese beiden Detektoren genauer bestimmen.

Es ist denkbar, dass sich insbesondere Tabletten bei ihrer Bewegung durch eine Förderanlage oder auch über eine Wiegerutsche statisch aufladen. Um Einflüsse dieser statischen Aufladung auf die mitunter sehr empfindliche Wägezelle unterhalb der Wägerutsche zu vermeiden, kann es sinnvoll sein, die Wiegerutsche als faradayschen Käfig auszubilden und/oder eine Entladung der Wägerutsche durch geeignete Erdungsmaßnahmen sicherzustellen.

Auch der Abrieb an Wiegegütern, welche über die Wägerutsche gefördert werden, soll möglichst verhindert werden. Eine besonders zweckmäßige Querschnittsform der Wägerutsche für die Verwendung mit Tabletten hat dabei eine V-förmige Gestalt. Die beiden Schenkel des V bilden seitlich geneigte Gleitflächen, die an ihrem unteren Ende miteinander entlang einer vorzugsweise geraden Linie verbunden sind. Tablettenkapseln, die eine im Wesentlichen zylindrische Gestalt mit jeweils daran angrenzenden halbkugelförmigen Enden aufweisen, rutschen auf solchen V-förmigen Wägerutschen entlang zweier paralleler Berührungsgeraden abwärts, wodurch der Verschleiß zwischen Kapsel und Rutsche auf ein Minimum reduziert wird. Sofern die beiden Schenkel des V-Profils am unteren Scheitelpunkt nicht miteinander verbunden sind, kann der dazwischen bestehende Spalt zur Abfuhr von dennoch auftretendem Abriebmaterial oder sonstigen Verschmutzungen verwendet werden.

Zweckmäßigerweise wird die erfindungsgemäße Wiegerutsche auch unabhängig gegenüber Windkrafteinflüssen ausgebildet, um nicht von den Wiegegütern selbst herrührende Einflüsse, wie beispielsweise Luftbewegungen, auf die Wägezelle ausschließen zu können.

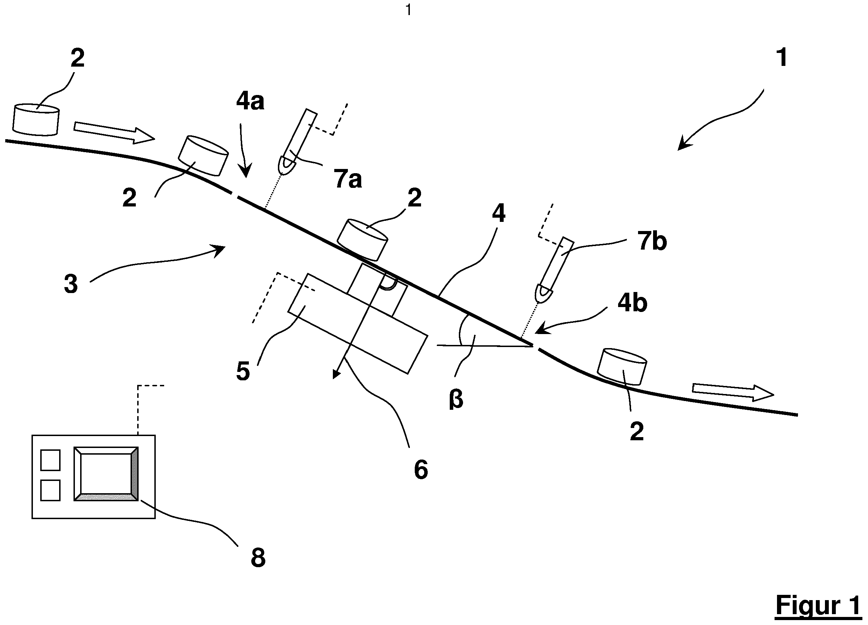

Nachfolgend soll eine Ausführungsform der Erfindung anhand eines Figurenbeispiels näher beschrieben werden. Die einzige Fig. 1 zeigt dabei in schematischer Darstellung eine Wiegevorrichtung 1. Die Vorrichtung umfasst eine Wägerutsche 3, zu der eine gerade ausgebildete Gleitfläche (4) gehört. Die Gleitfläche 4 ist gegenüber der Horizontalen um einen Winkel β geneigt angeordnet. Die Gleitfläche 4 wird von einer Wägezelle 5 als Vorlast getragen, wobei die Lasteinleitungsrichtung 6 der Wägezelle 5 senkrecht zur Gleitfläche 4 angeordnet ist.

Der Gleitfläche 4 werden an ihrem oberen Ende 4a nacheinander Tabletten 2 zugeführt, die aufgrund ihrer Gewichtskraft entlang der Oberfläche der Gleitfläche 4 herabgleiten und diese an ihrem unteren Ende 4b verlassen. Zwei Detektoren 7a, 7b zur Erfassung einzelner Tabletten 2 sind am oberen und unteren Ende 4a, 4b der Gleitfläche 4 angeordnet und zur Übertragung ihrer Signale mit einer übergeordneten Steuereinheit 8 verbunden. Die Steuereinheit 8 erhält auch die Messwerte der Wägezelle 5, um daraus einen Gewichtswert zu bilden und ausgeben zu können.

Die Zufuhr einer Tablette 2 am oberen Ende der Gleitfläche 4 wird über den Detektor 7a erkannt und der Steuereinheit 8 gemeldet. Unter der Annahme, dass sich nur eine Tablette 2 auf der Gleitfläche 4 befindet, kann der von der Wägezelle 5 erfasste Messwert sodann in der Steuereinheit 8 zur Ermittlung eines Gewichtswerts der jeweiligen Tablette 2 herangezogen werden. Der Messwert kann über eine längere Zeit berücksichtigt und zum Beispiel gemittelt werden, wobei dieses Zeitfenster beispielsweise dann endet, wenn das Eintreffen der Tablette 2 am unteren Ende 4b der Gleitfläche 4 über den Detektor 7b erkannt und der Steuereinheit 8 gemeldet wird.

Mit der gezeigten Vorrichtung lässt sich ohne Kenntnis der Geschwindigkeit der Tabletten 2 deren Gewicht zuverlässig bestimmen, wobei dynamische Einflüsse in Bewegungsrichtung aufgrund der orthogonal dazu angeordneten Lasteinleitungsrichtung ohne Einfluss auf den Gewichtswert bleiben. Auch sehr schnell beförderte Tabletten oder andere Wiegegüter sind mit dieser Vorrichtung auf einfache Weise zu wiegen, wobei der Durchsatz noch erhöht werden kann, indem mehrere Tabletten gleichzeitig auf der Gleitfläche 4 berücksichtigt werden.

Stromaufwärts der erfindungsgemäßen Wägevorrichtung kann eine geeignete Zuführvorrichtung vorgesehen sein, um der Wägerutsche die zu wiegenden Güter zuzuführen. Ebenso kann stromabwärts der Wägerutsche beispielsweise eine Sortiervorrichtung vorgesehen sein, um die gewogenen Produkte nach bestimmten Kriterien sortieren zu können.

## Patentansprüche

1. Wiegevorrichtung (1) zur geschwindigkeitsunabhängigen Gewichtsbestimmung diskreter und schnell bewegter Wiegegüter (2),
a) mit einer Wägerutsche (3), umfassend eine gegenüber der Horizontalen um einen Winkel (β) geneigte Gleitfläche (4), entlang derer die vereinzelten Wiegegüter (2) gleiten, und
b) mit einer Wägezelle (5), wobei die Wägerutsche für die Wägezelle Vorlast bildet,
c) wobei die Wägezelle mit ihrer Lasteinleitungsrichtung (6) senkrecht zur geneigten Gleitfläche ausgerichtet ist, und
d) mit wenigstens einem Detektor (7a, 7b) zur Erfassung eines der Gleitfläche (4) zugeführten Wiegeguts (2),
**dadurch gekennzeichnet**
e) dass der wenigstens eine Detektor zur Bestimmung eines Zeitfensters ausgebildet ist, innerhalb dessen die Gewichtsbestimmung erfolgen soll, indem der Detektor ein Signal an eine Steuereinheit übermittelt, und für eine vorgebbare Zeitspanne, die sich unmittelbar an das eintreffende Signal oder auch mit einem vorgebbaren zeitlichen Abstand dazu anschließen kann, der von der Wägezelle erfasste Messwert zur Gewichtsbestimmung herangezogen wird.

2. Wiegevorrichtung nach dem vorherigen Anspruch, **dadurch gekennzeichnet, dass** die Wiegevorrichtung zur Gewichtsbestimmung mehrerer Wiegegüter (2) innerhalb eines Zeitfensters ausgebildet ist, indem durch Bilanzierung der zu- bzw. abgeführten Wiegegüter (Differenzverfahren) einzelnen Gütern der jeweils korrekte Gewichtswert zugeordnet werden kann.

3. Wiegevorrichtung nach einem der vorigen Ansprüche, **dadurch gekennzeichnet, dass** aus den Signalen des wenigstens einen Detektors (7a, 7b) die Anzahl der Wiegegüter bestimmbar ist, welche in einem vorgebbaren oder ermittelten Zeitfenster der Gleitfläche (4) zugeführt wurden.

4. Wiegevorrichtung nach einem der vorigen Ansprüche, **dadurch gekennzeichnet, dass** die Gleitfläche an einem Eintrittsbereich (4a) und einem Austrittsbereich (4b) jeweils mit einem Detektor (7a, 7b) versehen ist, der den Durchlauf eine Wiegeguts (2) erkennt und dadurch die Festlegung des Beginns und des Endes eines Zeitfensters für die Gewichtsbestimmung ermöglicht.

## Claims

1. A weighing device (1) for determining independently of speed the weight of discrete and rapidly moving goods (2) that are to be weighed,
a) having a weighing chute (3) comprising a sliding surface (4) that is inclined with respect to the horizontal about an angle (β) and along which the separated goods (2) to be weighed slide, and
b) having a weighing cell (5), wherein the weighing chute constitutes an initial load for the weighing cell,
c) wherein the weighing cell is aligned with its load-introduction direction (6) so that it is perpendicular to the inclined sliding surface, and
d) having at least one detector (7a, 7b) to detect one of the goods (2) to be weighed that is fed to the sliding surface (4),
**characterised in that**
e) the at least one detector is configured to determine a time window, within which the determination of the weight is to be effected, **in that** the detector transmits a signal to a control unit, and for a predeterminable time span, which can follow the arriving signal directly or else with a predeterminable time interval with respect thereto, the measured value detected by the weighing cell is used to determine the weight.

2. A weighing device according to the previous claim, **characterised in that** the weighing device for determining the weight of a plurality of goods (2) to be weighed within a time window is configured **in that** by balancing the goods to be weighed that are supplied and/or discharged (differential method) it is possible to assign to individual goods the respectively correct weight value.

3. A weighing device according to one of the previous claims, **characterised in that** it is possible to determine from the signals of the at least one detector (7a, 7b) the number of goods to be weighed that have been fed to the sliding surface (4) in a predeterminable or ascertained time window.

4. A weighing device according to one of the previous claims, **characterised in that** the sliding surface is provided, at an entry region (4a) and an exit region (4b), with a respective detector (7a, 7b) that identifies the passage of a good (2) to be weighed and as a result makes it possible to establish the start and the end of a time window for the weight-determination.

## Revendications

1. Dispositif de pesée (1) pour la détermination du poids, indépendamment de la vitesse, d'articles à peser (2) discrets et se déplaçant rapidement,
a) comprenant une glissière de pesée (3), comportant une surface de glissement (4) inclinée par rapport à l'horizontale selon un angle (β), le long de laquelle glissent un à un les articles à peser (2), et
b) comprenant une cellule de pesée (5), la glissière de pesée formant précharge pour la cellule de pesée,
c) la cellule de pesée étant orientée avec son dispositif d'application de charge (6) perpendiculairement à la surface de glissement inclinée, et
d) comprenant au moins un détecteur (7a, 7b) destiné à détecter un article à peser (2) amené à la surface de glissement (4),
**caractérisé en ce que**
e) le ou les détecteurs sont conçus pour déterminer une fenêtre temporelle pendant laquelle la détermination du poids doit avoir lieu, du fait que le détecteur transmet un signal à une unité de commande, et pendant un laps de temps pouvant être prédéfini, qui peut directement faire suite au signal arrivant ou bien à un intervalle de temps pouvant être prédéfini, la valeur de mesure acquise par la cellule de pesée est utilisée pour la détermination du poids.

2. Dispositif de pesée selon la revendication précédente, **caractérisé en ce que** le dispositif de pesée est conçu pour déterminer le poids de plusieurs articles à peser (2) pendant une fenêtre temporelle, du fait que par équilibrage des articles à peser amenés ou évacués (procédé différentiel), la valeur de poids respectivement correcte peut être associée aux différents articles.

3. Dispositif de pesée selon l'une quelconque des revendications précédentes, **caractérisé en ce que** le nombre des articles à peser, lesquels sont amenés à la surface de glissement (4) dans une plage temporelle pouvant être prédéfinie ou déterminée, peut être défini à partir des signaux du ou des détecteurs (7a, 7b).

4. Dispositif de pesée selon l'une quelconque des revendications précédentes, **caractérisé en ce que** la surface de glissement est pourvue au niveau d'une zone d'entrée (4a) et d'une zone de sortie (4b) respectivement d'un détecteur (7a, 7b), qui reconnaît le passage d'un article à peser (2) et permet ainsi d'établir le début et la fin d'une fenêtre temporelle pour la détermination du poids.
